## Europäisches Patentamt
## European Patent Office
## Office européen des brevets

(19)

(11) Numéro de publication : **0 152 320**
**B1**

(12)

# FASCICULE DE BREVET EUROPÉEN

(45) Date de publication du fascicule du brevet :
29.07.87

(51) Int. Cl.⁴ : **B 62 B 1/10**, B 62 B 1/12

(21) Numéro de dépôt : 85400106.2

(22) Date de dépôt : 23.01.85

(54) Véhicule léger de chantier, du type comportant une benne et deux roues.

(30) Priorité : 03.02.84 FR 8401691

(43) Date de publication de la demande :
21.08.85 Bulletin 85/34

(45) Mention de la délivrance du brevet :
29.07.87 Bulletin 87/31

(84) Etats contractants désignés :
AT BE CH DE FR GB IT LI LU NL SE

(56) Documents cités :
DE-A- 221 544
US-A- 1 885 795
US-A- 2 522 894

(73) Titulaire : UNION TECHNIQUE INTERPROFESSIO-
NELLE DES FEDERATIONS NATIONALES DU BATI-
MENT ET DES TRAVAUX PUBLICS (U T I)
9 rue la Pérouse
F-75016 Paris (FR)

(72) Inventeur : Noel, Georges
32, résidence du Coteau
F-78460 Chevreuse (FR)
Inventeur : Pichon, Georges
7, cours Bugeaud
F-87000 Limoges (FR)

(74) Mandataire : Martin, Jean-Jacques et al
Cabinet REGIMBEAU 26, Avenue Kléber
F-75116 Paris (FR)

EP 0 152 320 B1

Jouve, 18, rue St-Denis, 75001 Paris, France

## Description

La présente invention concerne les véhicules de chantier et, en particulier, les véhicules légers approvisionneurs de matériaux.

Il existe déjà de nombreux types de véhicules légers de chantier, le plus connu étant sans nul doute la brouette, cet engin s'adaptant particulièrement bien et en de nombreuses circonstances au transport de matériaux les plus divers. Toutefois, dans une utilisation typique, ce véhicule apparaît comme mal approprié.

En effet, une brouette du type comportant un tombereau, à une ou deux roues, munie de brancards présente un encombrement au sol important compte tenu du volume utile proposé pour la manutention des charges. Lors d'une utilisation en intérieur, en particulier lors de travaux de construction ou de rénovation de bâtiment, cet encombrement devient un inconvénient majeur. Ainsi, les brancards et la roue faisant saillie au-delà du tombereau réduisent les possibilités de manœuvre de l'engin, lui interdisant de prendre des virages dans des couloirs trop étroits ou le passage de portes contiguës.

De plus les travaux tels que la rénovation ou la réhabilitation de logements anciens nécessitent couramment l'emploi de dispositifs de levage des charges extérieurs au bâtiment, ceci afin d'approvisionner les différents étages en matériaux lourds et encombrants. La brouette s'avère mal adaptée à ce genre d'utilisation, ses brancards ou sa roue risquant de s'accrocher à des points de la façade faisant saillie tels que notamment un balcon, une balustrade, et, par conséquent, de rompre l'équilibre de la charge. Plus encore, la pénétration de l'engin par un ouvrant est laborieuse et réclame beaucoup d'attention de la part du personnel de manutention.

Un autre inconvénient connu de la brouette est de nécessiter pour son déplacement des efforts non négligeables de la part du personnel pour soulever et pousser l'engin.

Afin de remédier à ces inconvénients divers, d'autres véhicules de chantier ont déjà été proposés, par exemple un véhicule du type comportant une benne suspendue pendulairement entre deux roues (DE-A-221 544). Toutefois, leur complexité et leur fragilité résultant d'une sophistication poussée les ont fait rejeter du monde du bâtiment, ce dernier étant traditionnellement attaché à n'utiliser qu'un matériel simple et fiable.

La présente invention vient remédier à ces inconvénients et propose en effet un nouveau véhicule de chantier.

Le nouveau véhicule de chantier selon l'invention, comporte comme il est classique une benne et deux roues disposées coaxialement de part et d'autre de la benne. De façon caractéristique ladite benne vient s'inscrire dans le cylindre fictif formé par lesdites roues et, la benne étant munie de deux ensembles d'éléments de roulement faisant saillie de part et d'autre de cette dernière, chaque roue comportant une piste de roulement et des moyens de guidage, chaque ensemble d'éléments de roulement coopère avec une piste de roulement et les moyens de guidage de chacune des roues afin d'assurer à la fois la cohésion de l'ensemble et la libre rotation de la benne par rapport aux roues.

Ce nouveau véhicule, particulièrement adapté pour une utilisation dans le domaine de la réhabilitation présente divers avantages. En effet, ce nouvel engin se propose de résoudre les problèmes posés par le transport de matériaux depuis un point de livraison jusqu'à un point d'utilisation quelles que puissent être les difficultés du trajet, ceci sans autre manipulation des matériaux qu'un chargement et un déchargement effectués à ces deux points, diminuant ainsi les pertes de temps, d'énergie et, par conséquent les coûts.

Ainsi, en maintenant l'axe des roues parallèle au sol, le nouveau véhicule maintient sa charge en équilibre quel que soit son déplacement vertical ou horizontal, empêchant par là-même tout déversement accidentel. En effet, une rotation des roues lors d'un déplacement, provoque une rotation des éléments de roulements, de façon à transformer le mouvement de rotation et de translation des roues en simple mouvement de translation de la benne.

Par conséquent, le nouveau véhicule peut rouler aussi bien sur un plan vertical (le sol) que sur un plan horizontal (une façade) et ainsi effectuer tous les déplacements possibles sans qu'il soit nécessaire de transborder la charge.

De plus, ses caractéristiques dimensionnelles et en particulier sa faible largeur lui permettent de pénétrer facilement par les ouvrants tels que les fenêtres ou les portes, et de circuler dans des couloirs étroits. Plus encore, ses roues différentielles lui autorisent des virages sur place, à sensiblement 360°, cette caractéristique essentielle lui permettant d'emprunter les passages de portes contiguës.

Comparativement à la brouette décrite ci-dessus, pour un même encombrement au sol, le volume utile de l'engin se voit tripler, autorisant des charges importantes et relativement encombrantes.

De plus, le déplacement du véhicule nécessite un effort moindre, le manutentionnaire n'ayant plus à soulever l'engin comme décrit précédemment, mais uniquement à le pousser ou à le tirer.

D'autres caractéristiques et avantages de l'invention apparaîtront au cours de la description qui va suivre et sur les dessins auxquels elle fait référence ; sur ces dessins, les mêmes références désignent les mêmes éléments. Plus précisément :

La figure 1A est une vue latérale du véhicule de chantier selon l'invention dans un premier mode de réalisation ;

la figure 1B est une vue de face en coupe selon la ligne B-B de la figure 1A, du véhicule selon l'invention dans ce premier mode de réalisation ;

la figure 2A est une vue latérale du véhicule de chantier selon l'invention dans un second mode de réalisation ;

la figure 2B est une vue de face en coupe selon la ligne B-B de la figure 2A, du véhicule selon l'invention dans ce second mode de réalisation, et

les figures 3A, 3B et 3C représentent un dispositif de levage du véhicule de chantier.

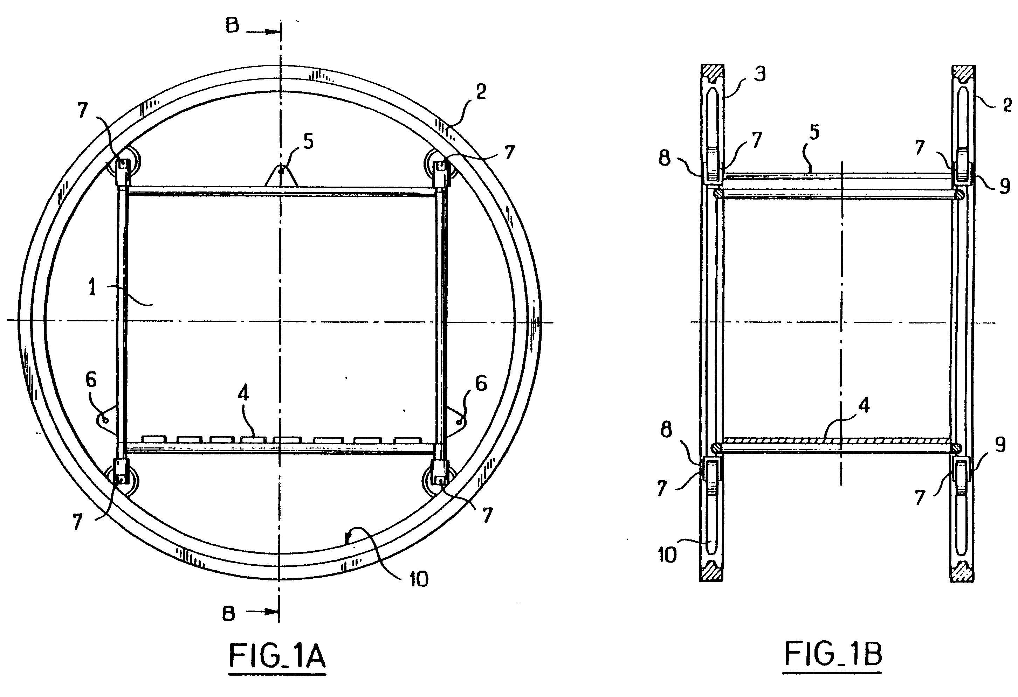

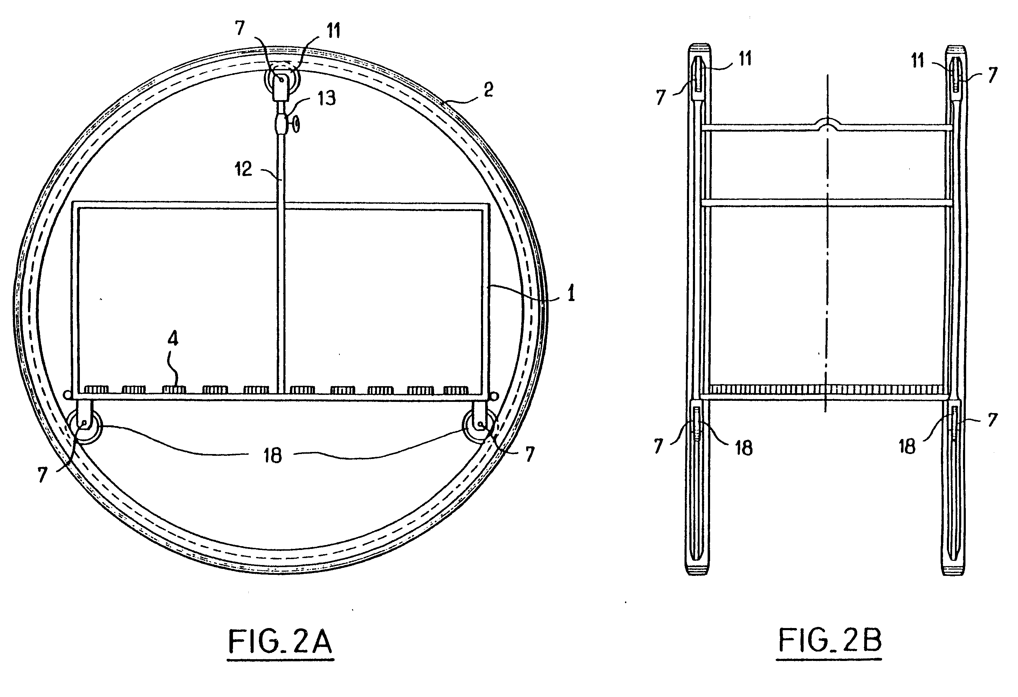

Comme le montrent les figures 1A, 1B, 2A et 2B, le véhicule de chantier selon l'invention comporte essentiellement une benne 1 et deux roues 2 et 3.

Comme le montrent les figures 1A et 1B, dans un premier mode de réalisation, la benne 1 est constituée de douze tubes métalliques placés de façon à former les arêtes d'un parallélépipède rectangle, lesdits tubes formant des longerons, les traverses et les montants dudit parallélépipède. La benne comporte un plancher 4 susceptible de recevoir la charge, lequel est disposé entre les quatre tubes inférieurs, un anneau de manutention 5 formant une anse entre les deux longerons supérieurs, et quatre points d'accrochage 6 au bas des montants, lesquels sont aptes à recevoir des moyens de traction de part et d'autre de la benne 1.

La benne comporte, en outre, huit éléments de roulement 7, en l'espèce huit galets disposés aux huit coins de la benne, les axes desdits galets 7 étant parallèles à l'axe transversal de la benne. Lesdits galets se décomposent, par rapport au plan de symétrie définie par les axes longitudinal et vertical, en deux ensembles de quatres galets 8 et 9, les centres des galets de chaque ensemble s'inscrivant sur une circonférence fictive.

D'un diamètre intérieur légèrement supérieur à celui de la circonférence fictive décrite ci-dessus, les roues 2 et 3 présentent une section transversale en forme de couronne. Une piste de roulement pourvue de moyens de guidage, en l'occurrence une gorge 10, est ménagée sur la surface interne desdites roues 2 et 3, lesquelles comportent en outre un bandage caoutchouté extérieur afin de faciliter leur déplacement.

Les roues 2 et 3 sont disposées coaxialement sur l'axe transversal, de part et d'autre de la benne 1, ladite benne 1 venant s'inscrire dans le cylindre fictif formé par lesdites roues 2 et 3. Chaque ensemble de galets 8 et 9 coopère avec la gorge 10 de la roue associée afin d'assurer, grâce aux moyens de guidage, la cohésion de l'ensemble, et, grâce à la piste de roulement, la libre rotation de la benne par rapport aux roues.

Comme le montrent les figures 2A et 2B, dans un second mode de réalisation, le véhicule de chantier selon l'invention comporte, outre une benne 1 de forme parallélépipédique munie d'un plancher 4 et d'un anneau de manutention 5, six éléments de roulement 7, en l'espèce six galets se décomposant en deux ensembles de trois galets suivant le plan de symétrie défini par l'axe longitudinal et l'axe transversal, les axes des galets 7 de chaque ensemble étant parallèles à l'axe transversal de la benne 1, leur centre s'inscrivant sur une circonférence fictive. De plus, les galets 7 de chaque ensemble sont angulairement répartis de façon régulière par rapport à l'axe transversal, deux galets 10 étant disposés aux coins inférieurs de la benne afin de répartir la charge sur deux portées, le troisième galet 11 étant fixé à l'extrémité d'un tube métallique 12 disposé verticalement au droit des longerons inférieur et supérieur. Ce tube métallique 12 est muni de moyens de réglage de sa longueur 13, en l'espèce deux tubes montés télescopiquement l'un dans l'autre, une vis de réglage permettant de solidariser ces derniers. Ainsi, il est possible de monter et de démonter rapidement le véhicule par simple dévissage des deux moyens de réglage 13, libérant, par conséquent, la benne 1 des deux roues 2 et 3 ce qui présente de multiples avantages tels que notamment de pouvoir réduire facilement l'encombrement du véhicule en cas de transport, de stockage ou de passage trop étroit. De plus, la benne 1, séparée des roues 2 et 3, peut malgré tout rouler grâce aux galets situés sur sa partie inférieure, les manipulations s'en trouvant aisées.

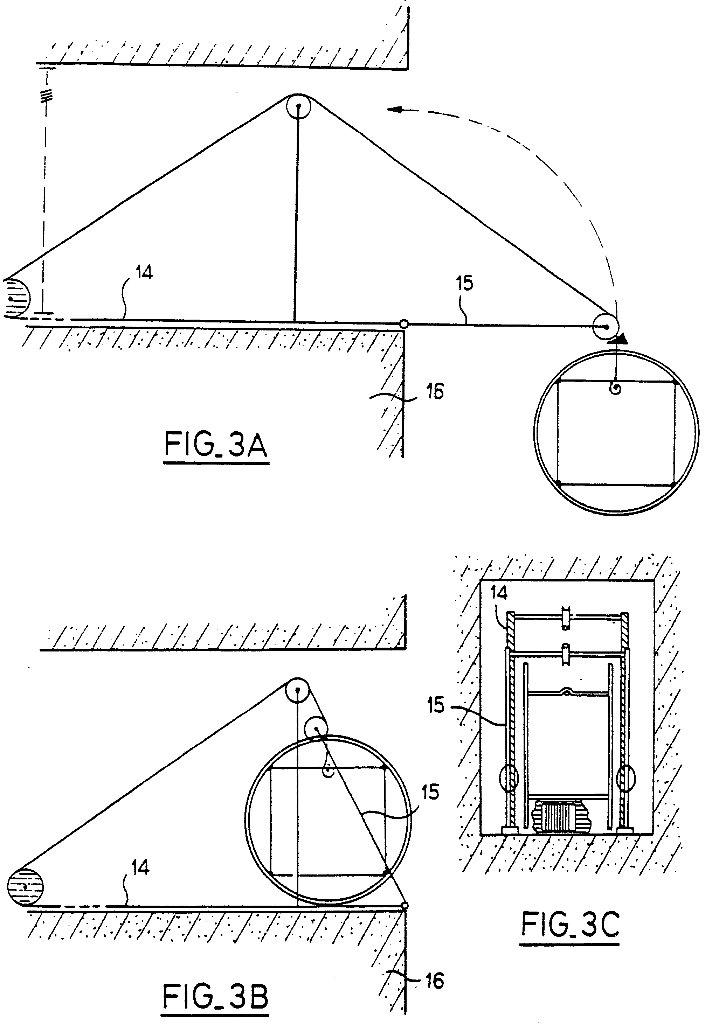

Comme le montrent les figures 3A, 3B et 3C, un dispositif de levage peut être associé au véhicule selon l'invention afin de permettre à ce dernier de pénétrer à l'intérieur d'un bâtiment par un ouvrant situé en façade. Ce dispositif facilite le passage d'obstacles tels que des balcons ou des parties de mur sans pour cela avoir à augmenter considérablement la longueur de la potence en surplomb de la façade.

Le dispositif de levage comporte une console fixe 14 en forme de T posé sur les ailes, l'extrémité de l'âme du T comportant une poulie, une console mobile 15 montée à l'extrémité d'une aile du T faisant saillie au-delà du bâtiment 16, ladite console mobile étant munie à son extrémité d'une poulie, et un câble passant par les deux poulies relié à une de ses extrémités à la charge, le véhicule de chantier, et à l'autre à un moyen d'entraînement.

La charge arrivant au niveau de la console mobile 15, cette dernière s'articule autour de l'extrémité de l'aile du T. de façon à déposer le véhicule à l'intérieur de l'habitation 16, sans que ce dernier n'est touché à la façade, un heurt n'étant malgré tout sans aucune conséquence en raison du caractère roulant du véhicule. En effet, le véhicule peut rouler sur la façade et passer toutes sortes d'obstacles.

Bien entendu, l'invention n'est pas limitée aux modes de réalisation décrits.

En particulier, la forme de la benne 1 n'est nullement limitative, cette forme parallélépipédique n'étant qu'un exemple qui a l'avantage de présenter une grande rigidité, une forme cylindrique ou prismatique pouvant avantageusement remplacer cette dernière, la caractéristique recherchée étant de présenter un volume utile important tout en assurant une garde au sol suffisante.

**Revendications**

1. Véhicule de chantier du type comportant une benne (1) et deux roues (2, 3) disposées coaxialement de part et d'autre de la benne (1), caractérisé en ce que ladite benne (1) vient s'inscrire dans le cylindre fictif formé par lesdites roues (2, 3) et en ce que, la benne (1) étant munie de deux ensembles (8, 9) d'éléments de roulement (7) faisant saillie de part et d'autre de cette dernière (1), chaque roue (2, 3) comportant une piste de roulement et des moyens de guidage (10) associés, chaque ensemble (8, 9) d'éléments de roulement (7) coopère avec la piste de roulement et les moyens de guidage (10) de chacune des roues (8, 9) afin d'assurer à la fois la libre rotation de la benne (1) par rapport aux roues (2, 3) et la cohésion de l'ensemble.

2. Véhicule selon la revendication 1, caractérisé en ce que lesdites roues (2, 3) présentent une section transversale en forme de couronne, chaque ensemble d'éléments (8, 9) de roulement (7) coopérant avec la surface interne d'une roue (2, 3).

3. Véhicule selon l'une des revendications 1 et 2, caractérisé en ce que chaque ensemble (8, 9) d'éléments de roulement (7) comporte trois éléments de roulement (7) répartis angulairement par rapport à l'axe des roues (2, 3) d'une façon régulière (fig. 2A).

4. Véhicule selon l'une des revendications 1 et 2, caractérisé en ce que chaque ensemble (8, 9) d'élément de roulement (7) comporte quatre éléments de roulement (7) répartis angulairement par rapport à l'axe des roues (2, 3) d'une façon régulière (fig. 1A).

5. Véhicule selon l'une des revendications 1 à 4, caractérisé en ce que ladite piste de roulement et les moyens de guidage sont une gorge (10) ménagée dans chacune des roues.

6. Véhicule selon l'une des revendications 1 à 5, caractérisé en ce que ladite benne (1) comporte au moins un anneau de manutention (5).

## Claims

1. Site vehicle of the type comprising a tub (1) and two wheels (2, 3) arranged coaxially on either side of the tub (1), characterised in that the said tub (1) is inscribed in the imaginary cylinder formed by the said wheels (2, 3) and in that the tub (1) is provided with two arrangements (8, 9) of bearing members (7) projecting on either side of the latter (1), each wheel (2, 3) comprising a running track and associated guide means (10), each arrangement (8, 9) of bearing members (7) cooperates with the running track and the guide means (10) of each of the wheels (8, 9) in order to ensure simultaneously the free rotation of the tub (1) with respect to the wheels (2, 3) and the cohesion of the arrangement.

2. Vehicle according to Claim 1, characterised in that the said wheels (2, 3) have a cross section in the form of a ring, each arrangement of members (8, 9) of the bearing (7) cooperating with the inner surface of a wheel (2, 3).

3. Vehicle according to one of Claims 1 and 2, characterised in that each arrangement (8, 9) of bearing members (7) comprises three bearing members (7) distributed angularly with respect to the axis of the wheels (2, 3) in a regular manner (Figure 2A).

4. Vehicle according to one of Claims 1 and 2, characterised in that each arrangement (8, 9) of bearing members (7) comprises four bearing members (7) distributed angularly with respect to the axis of the wheels (2, 3) in a regular manner (Figure 1A).

5. Vehicle according to one of Claims 1 to 4, characterised in that the said running track and the guide means are a groove (10) provided in each of the wheels.

6. Vehicle according to one of Claims 1 to 5, characterised in that the said tub (1) comprises at least one handling ring (5).

## Patentansprüche

1. Ladewagen mit einem Behälter (1) und zwei Rädern (2, 3), welche koaxial zu beiden Seiten des Behälters (1) angeordnet sind, dadurch gekennzeichnet, daß der Behälter (1) in den durch die beiden Räder (2, 3) gebildeten fiktiven Zylinder einbeschrieben ist, daß der Behälter (1) mit zwei beiderseits über ihn (1) vorstehenden Anordnungen (8, 9) von Rollelementen (7) versehen ist, daß jedes Rad (2, 3) eine Rollbahn und zugehörige Führungsmittel (10) aufweist, und daß jede Anordnung (8, 9) von Rollelementen (7) mit der Rollbahn und den Führungsmitteln (10) des jeweiligen Rads (8, 9) derart zusammenwirkt, daß zugleich die freie Drehung des Behälters (1) bezüglich der Räder (2, 3) und der Zusammenhalt der Anordnung sichergestellt sind.

2. Wagen nach Anspruch 1, dadurch gekennzeichnet, daß die Räder (2, 3) einen kronenförmigen Querschnitt aufweisen, wobei jede Anordnung (8, 9) von Rollelementen (7) mit der Innenfläche eines Rads (2, 3) zusammenwirkt.

3. Wagen nach Anspruch 1 oder 2, dadurch gekennzeichnet, daß jede Anordnung (8, 9) von Rollelementen (7) drei Rollelemente (7) aufweist, welche in gleichmäßigen Winkelabständen bezüglich der Achse der Räder (2, 3) verteilt sind (Fig. 2A).

4. Wagen nach Anspruch 1 oder 2, dadurch gekennzeichnet, daß jede Anordnung (8, 9) von Rollelementen (7) vier Rollelemente (7) aufweist, die in gleichmäßigen Winkelabständen bezüglich der Achse der Räder (2, 3) verteilt sind (Fig. 1A).

5. Wagen nach einem der Ansprüche 1 bis 4, dadurch gekennzeichnet, daß die Rollbahn und die Führungsmittel jeweils als eine in jedem Rad ausgespartes Rille (10) ausgebildet sind.

6. Wagen nach einem der Ansprüche 1 bis 5, dadurch gekennzeichnet, daß der Behälter (1) mindestens eine Transportöse (5) aufweist.

FIG.1A

FIG.1B

0 152 320

FIG. 2A          FIG. 2B

FIG_3A

FIG_3B

FIG_3C